Europäisches Patentamt

European Patent Office

Office européen des brevets

(11) Veröffentlichungsnummer : **0 111 766**
**B1**

(12) **EUROPÄISCHE PATENTSCHRIFT**

(45) Veröffentlichungstag der Patentschrift :
**06.05.87**

(51) Int. Cl.⁴ : **B 60 T   8/26**

(21) Anmeldenummer : **83111553.0**

(22) Anmeldetag : **18.11.83**

(54) **Druckregelventil für eine hydraulische Fahrzeugbremsanlage.**

(30) Priorität : **22.11.82 DE 3243053**

(43) Veröffentlichungstag der Anmeldung :
**27.06.84 Patentblatt 84/26**

(45) Bekanntmachung des Hinweises auf die Patenterteilung : **06.05.87 Patentblatt 87/19**

(84) Benannte Vertragsstaaten :
**DE FR GB IT SE**

(56) Entgegenhaltungen :
**DE-A- 1 555 435
DE-C- 1 780 644
DE-C- 2 213 463
GB-A- 2 024 356**

(73) Patentinhaber : **LUCAS INDUSTRIES public limited company
Great King Street
Birmingham, B19 2XF West Midlands (GB)**

(72) Erfinder : **Schmitt, Gerd
Untere Grabenstrasse 12
D-5440 Mayen 14 (DE)**

(74) Vertreter : **Wuesthoff, Franz, Dr.-Ing. et ai
Patentanwälte Wuesthoff -v. Pechmann-Behrens-Goetz Schweigerstrasse 2
D-8000 München 90 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Druckregelventil für eine hydraulische Fahrzeugbremsanlage mit

einem Gehäuse, das einen Hauptzylinderanschluß und eine damit verbundene Einlaßkammer sowie einen Radzylinderanschluß und eine damit verbundene Auslaßkammer aufweist,

einem Kolben, der zwischen den beiden Kammern angeordnet ist und normalerweise eine Verbindung zwischen ihnen offen läßt,

und einem Ventilkörper, der bei Überschreitung einer bestimmten, auf ihn einwirkenden Verzögerungskraft in eine Schließstellung bewegbar ist, in der er die Verbindung zwischen den beiden Kammern unterbricht,

worauf der Kolben bei weiterem Druckanstieg in der Einlaßkammer diese auf Kosten der Auslaßkammer vergrößert.

Bei einem bekannten Druckregelventil dieser Gattung (DE-C-2 213 463) ist der Kolben als Stufenkolben ausgebildet, begrenzt mit seiner größeren Stirnfläche die Auslaßkammer und ist durch eine Feder derart vorgespannt, daß er normalerweise an einem vorderen Anschlag anliegt, der innerhalb der Auslaßkammer am Gehäuse ausgebildet ist. Die Verbindung zwischen den beiden Kammern ist von einem axialen Kanal im Kolben gebildet, dessen der Einlaßkammer zugewandtes Ende von einem ringförmigen Ventilsitz umgeben ist. Der Ventilkörper ist kugelförmig gestaltet und auf einer in Einbaustellung des Druckregelventils in bezug auf das Fahrzeug nach vorne ansteigenden Laufbahn innerhalb der Einlaßkammer beweglich. Im Stillstand und bei gleichförmiger Bewegung des Fahrzeugs liegt der Ventilkörper unter dem Einfluß seines Eigengewichts an einem hinteren Anschlag an und ist dadurch vom Ventilsitz ferngehalten. Wenn beim Bremsen die Verzögerung des Fahrzeugs einen bestimmten Betrag überschreitet, rollt der Ventilkörper infolge seiner Massenträgheit nach vorne aufwärts gegen einen mittleren Anschlag, der im Gehäuse derart angeordnet, ist, daß der Ventilkörper den Ventilsitz nicht erreichen kann, solange der Kolben unter dem Einfluß der Feder am vorderen Anschlag anliegt. Wenn jedoch der Druck der Bremsflüssigkeit in der Einlaßkammer und, wegen der noch offenen Verbindung durch den Kolben hindurch, auch in der Auslaßkammer einen bestimmten Betrag überschreitet, bewegt sich der Kolben gegen den Widerstand der Feder nach hinten, so daß sich der Ventilsitz an den Ventilkörper anlegt. Dieses bekannte Druckregelventil schließt also erst dann, wenn in der Auslaßkammer — und somit auch in den nachgeschalteten Radzylindern — ein bestimmter Druck aufgebaut worden ist. Bei weiterem Druckanstieg in der Einlaßkammer bewegt sich der Kolben wieder nach vorne, so daß sich der Ventilsitz vorübergehend vom Ventilkörper entfernt, wodurch ein weiterer Druckanstieg in der Auslaßkammer ermöglicht wird, jedoch nur in einem Maß, das gegenüber dem Druckanstieg in der Einlaßkammer im Verhältnis der Stirnflächen des Kolbens vermindert ist.

Diese Arbeitsweise des bekannten Druckregelventils ist unter normalen Bedingungen völlig zufriedenstellend. Bei einer plötzlichen und sehr heftigen Betätigung des Hauptzylinders wird der Kolben jedoch durch seine eigene Massenträgheit, ferner durch den sehr raschen Druckaufbau in der Einlaßkammer sowie durch Strömungskräfte der Bremsflüssigkeit daran gehindert, sich rechtzeitig in eine Stellung zu bewegen, in welcher der Ventilkörper den Ventilsitz erreichen kann. Dies kann dazu führen, daß ein plötzlicher Druckanstieg sich bis zu den angeschlossenen Radzylindern fortpflanzt und die zugehörigen Radbremsen zum Blockieren bringt. Da es sich dabei üblicherweise um Hinterradbremsen handelt, wird der Blockierzustand auch dann nicht überwunden, wenn das Ventil endlich schließt, denn bis dahin hat sich infolge der Verzögerung des Fahrzeugs ein mehr oder weniger großer Teil von dessen Gewicht von den Hinterrädern auf die Vorderräder verlagert, so daß die Bodenhaftung der Hinterräder vermindert ist.

Es ist zwar ein weiteres Druckregelventil der eingangs beschriebenen Gattung bekannt (DE-C-1 780 644), das einem Blockieren der angeschlossenen Hinterräder bei besonders schneller Betätigung des Hauptbremszylinders dadurch entgegenwirkt, daß die Bremsflüssigkeit vom Hauptzylinder der Einlaßkammer durch eine auf den Ventilkörper gerichtete Düse zugeführt wird und somit einen Strahl bildet, der bestrebt ist, den Ventilkörper gegen den Ventilsitz zu drücken. Wenn dieser Strahl jedoch sehr kräftig ist, kann er ein vorzeitiges Schließen des Ventils bewirken und dadurch verhindern, daß in den angeschlossenen Radzylindern ein ausreichender Anfangsdruck erreicht wird.

Der Erfindung liegt deshalb die Aufgabe zugrunde, ein verzögerungsabhängiges Druckregelventil für eine hydraulische Fahrzeugbremsanlage derart zu gestalten, daß besonders heftige Druckstöße von den nachgeschalteten Radzylindern ferngehalten werden, jedoch ein wünschenswert steiler Druckanstieg in diesen Radzylindern während einer Anfangsphase einer Bremsbetätigung zugelassen wird.

Diese Aufgabe ist bei einem Druckregelventil der eingangs beschriebenen Gattung erfindungsgemäß dadurch gelöst, daß in der Auslaßkammer ein Drosselkörper angeordnet ist, der den Radzylinderanschluß normalerweise freiläßt, jedoch bei plötzlicher Bremsbetätigung durch die strömende Bremsflüssigkeit in eine Stellung bewegbar ist, in der er den Radzylinderanschluß teilweise abdeckt.

Damit wird erreicht, daß die Bremsflüssigkeit, wenn sie bei plötzlicher Betätigung des Hauptzylinders allzu rasch strömt, selber dafür sorgt, daß ihr der Weg zum Radzylinderanschluß teilweise versperrt wird, wodurch ein übermäßig steiler Druckanstieg in dem bzw. jedem nachgeschalteten Radzylinder verhindert wird.

Der Drosselkörper ist vorzugsweise so angeordnet, daß sein Gewicht bestrebt ist, ihn in seiner normalen Stellung zu halten, in der er den Radzylinderanschluß freiläßt. Alternativ oder zusätzlich könnte der Drosselkörper durch eine kleine Feder vom Radbremszylinderanschluß normalerweise ferngehalten werden.

Bei einer bevorzugten Ausführungsform der Erfindung ist der Drosselkörper eine im wesentlichen kreisförmige Scheibe, deren Durchmesser kleiner als der Durchmesser der Auslaßkammer, jedoch größer als deren größte axiale Länge ist. Der Drosselkörper kann aber auch eine andere Form haben, beispielsweise von einer kleinen Kugel gebildet sein, die mit der erforderlichen Beweglichkeit in einem Käfig oder einer Vorkammer vor dem Radzylinderanschluß aufgenommen ist.

Wenn der Drosselkörper eine Scheibe ist, dann ist es ferner zweckmäßig, wenn er Vorsprünge aufweist, die ihn daran hindern, abdichtend am Gehäuse oder am Kolben anzuliegen. Entsprechende Vorsprünge können aber auch am Gehäuse und am Kolben angeordnet sein.

Ein Ausführungsbeispiel der Erfindung wird im folgenden anhand schematischer Zeichnungen mit weiteren Einzelheiten beschrieben. Es zeigt :

Figur 1 einen Axialschnitt durch ein erstes Druckregelventil in Ruhestellung,

Figur 2 den vorderen Teil desselben Druckregelventils, ebenfalls im Axialschnitt, jedoch zu Beginn einer stoßartigen Bremsbetätigung,

Figur 3 den Querschnitt III-III in Fig. 2,

Figur 4 einen Axialschnitt durch ein zweites Druckregelventil in Ruhestellung.

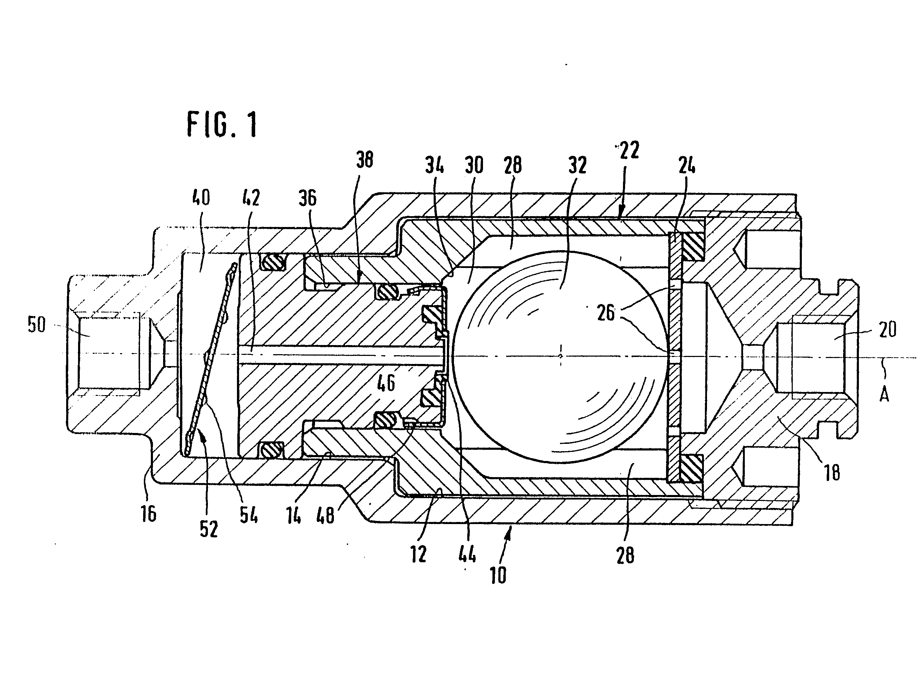

Das in Fig. 1 bis 3 dargestellte Druckregelventil hat ein rotationssymmetrisches, abgestuft zylindrisches Gehäuse 10, das in ein Fahrzeug so eingebaut wird, daß seine Achse A in oder parallel zur Längsmittelebene des Fahrzeugs angeordnet ist und leicht nach vorne ansteigt. Das Gehäuse hat einen hinteren Bohrungsabschnitt 12 von größerem Durchmesser und einen vorderen Bohrungsabschnitt 14 von kleinerem Durchmesser sowie eine vordere Stirnwand 16. Hinten ist das Gehäuse durch einen eingeschraubten Stopfen 18 abgeschlossen ; dieser weist einen axial angeordneten Hauptzylinderanschluß 20 auf, über den sich das Druckregelventil an einen Hauptzylinder einer Fahrzeugbremsanlage anschließen läßt.

Durch den Stopfen 18 sind ein abgestuft zylindrischer Einsatz 22 sowie eine scheibenförmige Blende 24 im Gehäuse 10 festgehalten. Die Blende 24 hat mehrere düsenartige Löcher 26, von denen eines axial angeordnet ist und die übrigen in gleichen Abständen rings um die Achse 1 angeordnet sind.

Innerhalb des Einsatzes 22 ist zwischen achsparallel angeordneten Rippen 28 eine Einlaßkammer 30 ausgebildet, die einen kugelförmigen Ventilkörper 32 aufnimmt und nach vorne durch einen ringförmigen Absatz 34 begrenzt ist. An den Absatz 34 schließt sich eine axiale Zylinderbohrung 36 im vorderen Teil des Einsatzes 22 an. Der Durchmesser der Zylinderbohrung 36 ist kleiner als der Durchmesser D des vorderen Bohrungsabschnittes 14. In der Zylinderbohrung 36 sowie im vorderen Bohrungsabschnitt 14 sind entsprechende Abschnitte eines abgestuften Kolbens 38 geführt, der mit seiner größeren Stirnfläche innerhalb des vorderen Bohrungsabschnittes 14 eine Auslaßkammer 40 begrenzt.

Durch den Kolben 38 hindruch erstreckt sich als Verbindung zwischen der Einlaßkammer 30 und der Auslaßkammer 40 ein axialer Kanal 42, dessen dem Einlaßkanal zugewandtes Ende von einem Ventilsitz 44 umgeben ist. Der Ventilsitz 44 ist an einem ringförmigen Elastomerkörper 46 ausgebildet, der mit einer Blechkappe 48 am hinteren Ende des Kolbens 38 festgehalten ist.

Die vordere Stirnwand 16 des Gehäuses 10 weist einen axialen Radzylinderanschluß 50 auf, über den das Druckregelventil im Einbauzustand mit einem Zylinder einer oder mehrerer Radbremsen verbunden ist. Dabei handelt es sich im allgemeinen auschließlich um Hinterradbremsen ; die Vorderradbremsen des Fahrzeugs werden vom Hauptzylinder unmittelbar mit Bremsflüssigkeit versorgt. Als Strömungshindernis zwischen dem Kanal 42 und dem mit ihm fluchtenden Radzylinderanschluß 50 ist in der Auslaßkammer 40 ein Drosselkörper 52 schwimmend angeordnet.

Der Drosselkörper 52 ist im dargestellten Beispiel von einer kreisförmigen Scheibe aus Blech gebildet, deren Durchmesser d etwas kleiner als der Durchmesser D der Auslaßkammer 40, jedoch erheblich größer als deren größtmögliche Länge L ist. Die Auslaßkammer 40 hat ihre größtmögliche Länge L in der gezeichneten normalen Stellung des Kolbens 38, in der dieser sich am vorderen Ende des Einsatzes 22 abstützt. Dabei nimmt der Drosselkörper 52 normalerweise die in Fig. 1 dargestellte Schräglage ein, in der er sich oben an der vorderen Stirnfläche des Kolbens 38 und unten im Winkel zwischen dem vorderen Bohrungsabschnitt 14 und der Stirnwand 16 des Gehäuses 10 abstützt.

An beiden Seiten des Drosselkörpers 52 sind in der Nähe von dessen Rand in gleichmäßigen Winkelabständen gegeneinander versetzt warzenförmige Vorsprünge 54 ausgebildet, so daß der Drosselkörper sich weder an die Stirnwand 16 des Gehäuses 10 noch an die vordere Stirnfläche des Kolbens 38 abdichtend anlegen kann.

Wenn der an das beschriebene Druckregelventil angeschlossene Hauptzylinder normal betätigt wird, strömt Bremsflüssigkeit mit mäßiger Geschwindigkeit durch den Hauptzylinderanschluß 20 und weiter durch die Löcher 26 der Blende 24 in die Einlaßkammer 30, von dort durch den axialen Kanal 42 des Kolbens 38 in den hinter dem Drosselkörper 52 liegenden Teil der Auslaßkammer 40. Die aus dem Kanal 42 austretende Bremsflüssigkeit hat eine nur mäßige Strömungsgeschwindigkeit und kann deshalb nur einen entsprechend schwachen Impuls auf den Drosselkörper 42 ausüben, so daß dieser seine in Fig. 1 abgebildete Stellung zumindest annähernd beibehält. Die Bremsflüssigkeit strömt im wesentlichen unbehindert durch den etwa sichelförmigen Spalt zwischen dem Rand des Drosselkörpers 52 und der Wand des vorderen Bohrungsabschnittes 14 hindurch zum Radzylinderanschluß 50 und von dort weiter zu den Zylindern der angeschlossenen Radbremsen.

Wenn das Fahrzeug infolge der so bewirkten Bremsung eine bestimmte Verzögerung erreicht hat, rollt der kugelförmige Ventilkörper 32 auf den unteren der Rippen 28 nach vorne und legt sich an den Ventilsitz 44 an, wodurch die Verbindung zwischen Einlaßkanal 30 und Auslaßkanal 40 unterbrochen wird. Bei weiterem Druckanstieg in der Einlaßkammer 30 bleibt der Druck in der Auslaßkammer 40 zunächst konstant, bis das Produkt aus dem Druck in der Einlaßkammer 30 und dem Flächeninhalt der hinteren, im Durchmesser kleineren Stirnfläche des Kolbens 38 größer ist als das Produkt aus dem Druck in der Auslaßkammer 40 und dem Flächeninhalt der vorderen, größeren Stirnfläche des Kolbens 38. Nun verschiebt sich der Kolben 38 nach vorne, wodurch der Druck in der Auslaßkammer 40 erhöht wird, jedoch in einem entsprechend dem Stirnflächenverhältnis des Kolbens 38 geringerem Maß als in der Einlaßkammer 30. Die bei der Vorwärtsbewegung des Kolbens 38 aus der Auslaßkammer 40 verdrängte Bremsflüssigkeit strömt, ohne durch den Drosselkörper 52 behindert zu werden, durch den Radzylinderanschluß 50 zu den angeschlossenen Radzylindern.

Wird der Druck im Hauptzylinder und somit auch in der Einlaßkammer 30 weiterhin kräftig erhöht, so bewegt sich der Kolben 38 schließlich soweit nach vorne, daß der Ventilkörper 32 ihm nicht mehr folgen kann, da er vom Absatz 34 zurückgehalten wird. Dadurch löst sich der Ventilsitz 44 vom Ventilkörper 32, so daß die Bremsflüssigkeit wieder durch den Kanal 42 hindurchströmen kann und in einem mehr oder weniger scharfen Strahl auf den mittleren Bereich des Drosselkörpers 52 trifft. Dadurch wird der Drosselkörper 52 gegen die vordere Stirnwand 16 gedrückt, so daß die Bremsflüssigkeit nur noch zwischen den vorderen Vorsprüngen 54 des Drosselkörpers 52 hindurch zum Radzylinderanschluß 50 gelangen kann. Die dadurch hervorgerufene Drosselwirkung verhindert, daß der Druck in den angeschlossenen Radzylindern allzu plötzlich ansteigt.

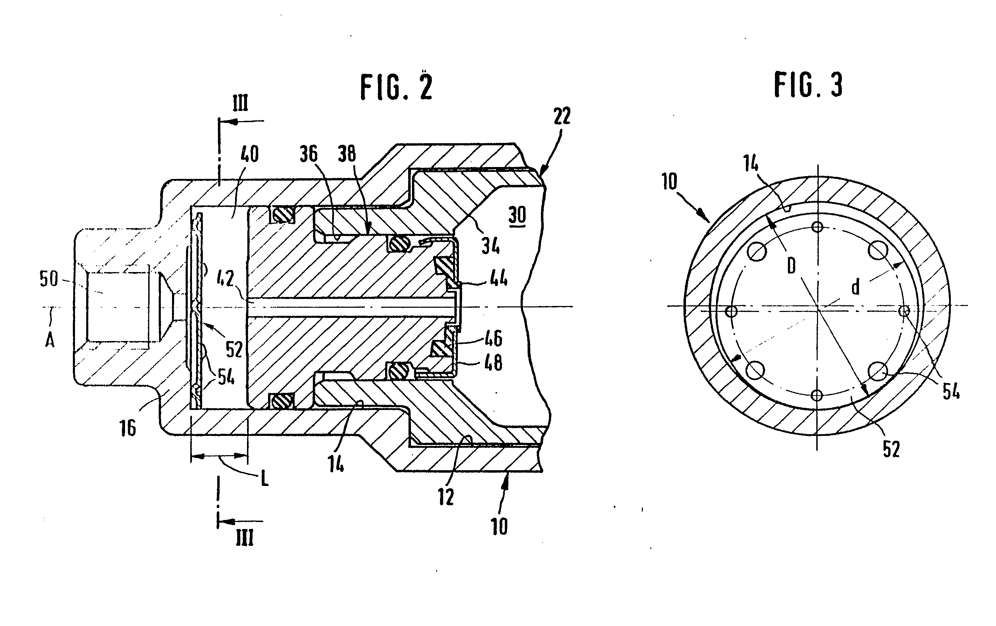

Entsprechendes gilt auch dann, wenn eine Bremsung durch einen heftigen Pedaldruck abrupt eingeleitet wird und infolgedessen der Druck in der Einlaßkammer 30 derart plötzlich ansteigt, daß die Bremsflüssigkeit mit großer Strömungsgeschwindigkeit durch den Kanal 42 hindurchströmt, wobei die Strömungskräfte bestrebt sind, den Kolben 38 stoßartig nach vorne zu bewegen, ohne daß der verhältnismäßig träge Ventilkörper 32 Zeit gehabt hat, sich an den Ventilsitz 44 anzulegen. Auch in diesem Fall wird der Drosselkörper 52 wirksam, da er von der strömenden Bremsflüssigkeit mitgerissen und, wie in Fig. 2 dargestellt, mit seinen vorderen Vorsprüngen 54 gegen die vordere Stirnwand 16 des Gehäuses 10 gedrückt wird.

Die Gestaltung des Drosselkörpers 52 als kreisförmige Scheibe und die dadurch bedingte Sichelform des Zwischenraumes, der in jeder Lage des Drosselkörpers vorwiegend zwischen dessen oberem Rand und der oberen Wand des vorderen Bohrungsabschnittes 14 freibleibt, hat im übrigen den Vorteil, daß die Bremsflüssigkeit den Drosselkörper 52 im wesentlichen oben umströmt und dadurch Luft mitreißt, die sich oben im Winkel zwischen der Stirnwand 16 und der Wand des vorderen Bohrungsabschnittes 14 gesammelt haben könnte. Auf diese Weise wird verhindert, daß sich innerhalb des dargestellten Druckregelventils ein Luftpolster bilden kann.

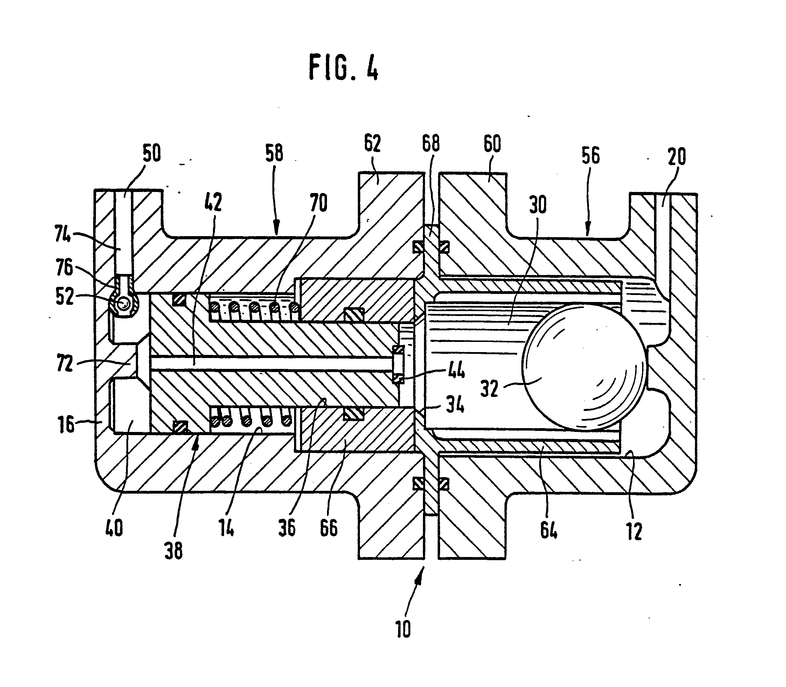

Das in Fig. 4 dargestellte Druckregelventil ist unmittelbar aus dem Ausführungsbeispiel der eingangs erwähnten DE 22 13 463 C3 entwickelt worden ; vergleichbare Bauteile sind jedoch mit den gleichen Bezugszeichen versehen wie in Fig. 1 bis 3.

Gemäß Fig. 4 ist das Gehäuse 10 des Druckregelventils aus zwei annähernd gleichgestalteten Gehäuseteilen 56 und 58 zusammengesetzt, die miteinander verschraubte Flansche 60 und 62 aufweisen. Der in Fig. 1 bis 3 einteilige Einsatz 22 ist durch zwei axial hintereinanderliegende Einsatzteile 64 und 66 ersetzt ; der Einsatzteil 64 hat einen Flansch 68, der zwischen den Flanschen 60 und 62 eingespannt ist.

Der Kolben 38 ist durch eine Druckfeder 70 nach vorne vorgespannt, so daß er in Ruhestellung an einem vorderen Anschlag 72 anliegt, der den Kanal 42 freiläßt. In dieser Stellung ist der Ventilsitz 44 für den Ventilkörper 32 nicht erreichbar. Wenn jedoch der Druck in den Kammern 30 und 40 bei einer Bremsbetätigung einen bestimmten Betrag erreicht hat, bewegt sich der Kolben 38 nach hinten in eine Stellung, in der sich der Ventilkörper 32 bei einer bestimmten Verzögerung des Fahrzeugs an den Ventilsitz 44 anlegen kann.

Die Auslaßkammer 40 ist mit dem Radzylinderanschluß 50 durch eine in Einbaulage des Druckregelventils zumindest annähernd senkrechte Bohrung 74 verbunden. In der Bohrung 74 ist ein Käfig 76 befestigt, der einen Drosselkörper 52 in Gestalt einer Kugel enthält. Der Drosselkörper 52 ist klein im Vergleich mit dem kugelförmigen Ventilkörper 32 und ist im Käfig 76 mit solchem Spiel aufgenommen, daß er von der strömenden Bremsflüssigkeit aus der abgebildeten unteren Endstellung in eine obere Endstellung mitgenommen werden kann.

In der unteren Endstellung, die durch einen nach innen gebogenen unteren Rand des Käfigs 76 festgelegt ist, behindert der Drosselkörper 52 die Strömung der Bremsflüssigkeit nicht nennenswert. In der oberen Endstellung, die durch einen in die Bohrung 74 eingepreßten Halsabschnitt des Käfigs 76 festgelegt ist, bildet der Drosselkörper 52 jedoch ein erhebliches Strömungshindernis, ohne der Bremsflüssigkeit den Eintritt in die Bohrung 74 ganz zu versperren.

## Patentansprüche

1. Druckregelventil für eine hydraulische Fahrzeugbremsanlage mit

einem Gehäuse (10), das einen Hauptzylinderanschluß (20) und eine damit verbundene Einlaßkammer (30) sowie einen Radzylinderanschluß (50) und eine damit verbundene Auslaßkammer (40) aufweist,

einem Kolben (38), der zwischen den beiden Kammern (30, 40) angeordnet ist und normalerweise eine Verbindung zwischen ihnen offenläßt,

und einem Ventilkörper (32), der bei Überschreitung einer bestimmten, auf ihn einwirkenden Verzögerungskraft in eine Schließstellung bewegbar ist, in der er die Verbindung zwischen den beiden Kammern (30, 40) unterbricht,

worauf der Kolben (38) bei weiterem Druckanstieg in der Einlaßkammer (30) diese auf Kosten der Auslaßkammer (40) vergrößert,

dadurch gekennzeichnet, daß in der Auslaßkammer (40) ein Drosselkörper (52) angeordnet ist, der der Radzylinderanschluß (50) normalerweise freiläßt, jedoch bei plötzlicher Bremsbestätigung durch die strömende Bremsflüssigkeit in eine Stellung bewegbar ist, in der er den Radzylinderanschluß (50) teilweise abdeckt.

2. Druckregelventil nach Anspruch 1, dadurch gekennzeichnet, daß der Drosselkörper (52) so angeordnet ist, daß sein Gewicht bestrebt ist, ihn in seiner normalen Stellung zu halten, in der er den Radzylinderanschluß (50) freiläßt.

3. Druckregelventil nach Anspruch 1 oder 2, dadurch gekennzeichnet, daß der Drosselkörper (52) eine im wesentlichen kreisförmige Scheibe ist, deren Durchmesser (d) kleiner als der Druchmesser (D) der Auslaßkammer (40), jedoch größer als deren größte axiale Länge (L) ist.

4. Druckregelventil nach Anspruch 3, dadurch gekennzeichnet, daß der Drosselkörper (52) Vorsprünge (54) aufweist, die ihn hindern, abdichtend am Gehäuse (10) oder am Kolben (38) anzuliegen.

5. Druckregelventil nach Anspruch 1 oder 2, dadurch gekennzeichnet, daß der Drosselkörper (52) eine kleine Kugel ist, die in einem Käfig (76) oder einer Vorkammer vor dem Radzylinderanschluß (50) aufgenommen ist.

## Claims

1. A pressure regulating valve for a hydraulic vehicle braking installation, comprising

a housing (10) which has a main cylinder connection (20) and an inlet chamber (30) connected therewith, as well as a wheel cylinder connection (50) and an outlet chamber (40) connected therewith.

a piston (38) which is arranged between the two chambers (30, 40) and normally leaves open a connection between them.

and a valve member (32) which is adapted to be moved when a certain deceleration force acting upon it is exceeded into a closed position in which it interrupts the connection between the two chambers (30, 40).

whereupon, when pressure in the inlet chamber (30) continues to increase, the piston (38) enlarges said inlet chamber (30) at the expense of the outlet chamber (40),

characterized in that a throttle member (52) is arranged in the outlet chamber (40) and normally leaves open the wheel cylinder connection (50) but is adapted to be moved by the flowing brake fluid on sudden brake actuation into a position in which it partially covers the wheel cylinder connection (50).

2. The pressure regulating valve according to claim 1, characterized in that the throttle member (52) is arranges such that its weight tends to hold it in its normal position in which it leaves the wheel cylinder connection (50) open.

3. The pressure regulating valve according to claim 1 or claim 2, characterized in that the throttle member (52) is an essentially circular disc whose diameter (d) is smaller than the diameter (D) of the outlet chamber (40), but greater than the greatest axial length (L) of said outlet chamber.

4. The pressure regulating valve according to claim 3, characterized in that the throttle member (52) has projections (54) which prevent it from sealingly abutting the housing (10) or the piston (38).

5. The pressure regulating valve according to claim 1 or claim 2, characterized in that the throttle member (52) is a small sphere which is received in a cage (76) or an antechamber in front of the wheel cylinder connection (50).

## Revendications

1. Soupape de réglage de pression pour une installation de freinage hydraulique pour véhicules comprenant :

un carter (10), qui comporte un raccord de maître-cylindre (20) et une chambre d'admission reliée à celui-ci ainsi qu'un raccord de cylindres de roues (50) et une chambre d'échappement (40) reliée à celui-ci,

un piston (38) qui est disposé entre les deux chambres (30, 40) et qui laisse normalement ouverte une liaison entre elles, et

un corps de soupape (32), qui peut être déplacé, lors d'un dépassement d'une force déterminée de ralentissement agissant sur lui, jusque dans une position de fermeture ou il interrompt la liaison entre les deux chambres (30, 40).

le piston (38) assurant, lors de l'augmentation ultérieure de la pression dans la chambre d'admission (30), une augmentation de volume de cette dernière au détriment de la chambre d'échappement (40),

caractérisée en ce qu'il est prévu dans la chambre d'échappement (40) un corps d'étranglement (52) qui dégage normalement le raccord de cylindres de roues (50) mais qui est déplaçable cependant, lors d'un brusque actionnement du frein, par l'écoulement de liquide de freinage jusque dans une position dans laquelle il ferme partiellement le raccord de cylindres de roues (50).

2. Soupape de réglage de pression selon la revendication 1, caractérisée en ce que le corps d'étranglement (52) est disposé de telle sorte que son poids ait tendance à le maintenir dans sa position normale où il dégage le raccord de cylindres de roues (50).

3. Soupape de réglage de pression selon la revendication 1 ou 2, caractérisée en ce que le corps d'étranglement (52) est un disque de forme sensiblement circulaire, dont le diamètre (d) est inférieur au diamètre (D) de la chambre d'échappement (40) mais est cependant supérieur à la longueur axiale maximale (L) de celle-ci.

4. Soupape de réglage de pression selon la revendication 3, caractérisée en ce que le corps d'étranglement (52) comporte des saillies (54) qui l'empêchent de s'appliquer de façon étanche contre le carter (10) ou le piston (38).

5. Soupape de réglage de pression selon la revendication 1 ou 2, caractérisée en ce que le corps d'étranglement (52) est une petite bille qui est logée dans une cage (76) ou dans une préchambre en amont du raccord de cylindres de roues (50).

FIG. 1

0 111 766

# FIG. 2

# FIG. 3

0 111 766

# FIG. 4